(19) Europäisches Patentamt
European Patent Office
Office européen des brevets

(11) **EP 4 140 046 B1**

(12) **EUROPEAN PATENT SPECIFICATION**

(45) Date of publication and mention of the grant of the patent:
**31.07.2024 Bulletin 2024/31**

(21) Application number: **20938623.4**

(22) Date of filing: **03.06.2020**

(51) International Patent Classification (IPC):
**H04B 1/7105** *(2011.01)* **H04L 25/03** *(2006.01)*
**H04L 25/06** *(2006.01)*

(52) Cooperative Patent Classification (CPC):
**H04L 25/03178; H04L 25/03076; H04L 25/03254; H04L 25/03267; H04L 25/03286; H04L 25/03318; H04L 25/067**

(86) International application number:
**PCT/CN2020/094199**

(87) International publication number:
**WO 2021/243607 (09.12.2021 Gazette 2021/49)**

(54) **EQUALISATION METHOD AND APPARATUS**

ENTZERRUNGSVERFAHREN UND -VORRICHTUNG

PROCÉDÉ ET APPAREIL D'ÉGALISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.03.2023 Bulletin 2023/09**

(73) Proprietor: **Huawei Technologies Co., Ltd.**
**Longgang District,**
**Shenzhen,**
**Guangdong 518129 (CN)**

(72) Inventors:
• **ZHANG, Huijian**
**Shenzhen, Guangdong 518129 (CN)**
• **TANG, Jin**
**Shenzhen, Guangdong 518129 (CN)**
• **SHANG, Dongdong**
**Shenzhen, Guangdong 518129 (CN)**

(74) Representative: **Maiwald GmbH**
**Engineering**
**Elisenhof**
**Elisenstrasse 3**
**80335 München (DE)**

(56) References cited:
**WO-A1-2016/130360      WO-A1-2021/080740**
**CN-A- 109 981 500      CN-A- 110 061 761**
**US-A1- 2002 054 655      US-A1- 2019 386 775**

• HAGENAUER J ET AL: "A VITERBI ALGORITHM WITH SOFT-DECISION OUTPUTS AND ITS APPLICATIONS", COMMUNICATIONS TECHNOLOGY FOR THE 1990'S AND BEYOND. DALLAS, NOV. 27 - 30, 1989; [PROCEEDINGS OF THE GLOBAL TELECOMMUNICATIONS CONFERENCE AND EXHIBITION (GLOBECOM)], NEW YORK, IEEE, US, vol. 3, 27 November 1989 (1989-11-27), pages 1680 - 1686, XP000650700

EP 4 140 046 B1

**Description**

**FIELD OF THE INVENTION**

This invention relates to equalisationin a signal receiver, for example for optical communication systems.

**BACKGROUND**

Inter-symbol-interference (ISI) exists in most communication systems. ISImay cause signal quality degradation at the receiver. Taking an optical communication system as an example, as the bandwidth demand continuously increases, the bitrate of optical signals is being pushed to the limit of, or even beyond, the bandwidth of optoelectronic devices and components. Thus, it is common to have moderate, or even strong, ISI inoptical communication systems, which can significantly limit the transmission performance.

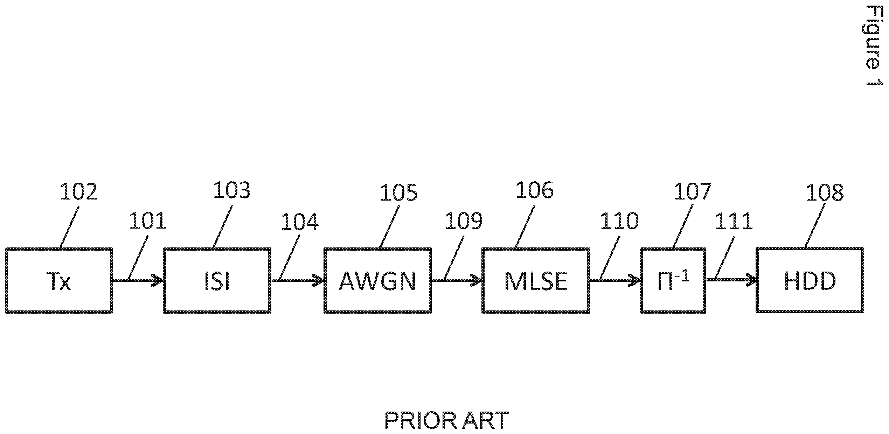

To combat ISI, various equalization solutionshave been proposed, such as afeed-forward equalizer (FFE), decision feedback equalizer (DFE) and maximum likelihood sequence estimator (MLSE). Among these methods, MLSE is the most powerful, or optimal, in the sense of minimizing the probability of sequence errors. MLSE usually employs a hard output Viterbi algorithm and thereforemay only be concatenated by a hard decision feed forward error correction (FEC) decoder, as shown in Figure 1. The output signal 101 from the transmitter 102 (Tx) is a sequence of Pulse Amplitude Modulation (PAM) or Quadrature Amplitude Modulation (QAM) symbols which is then distorted by the channel by adding inter-symbol-interference (ISI) at module 103. The ISI signal 104 is contaminated by the additive Gaussian white noise (AWGN) module 105 before entering the receiver. The receiver in Figure 1 only contains the function blocks relevant to this problem, which are MLSE 106, de-interleaver ($\pi^{-1}$) 107, and the hard decision decoder (HDD) 108. Other function blocks in the receiver, such as phase recovery and clock recovery, are not shown. In Figure 1, the received symbol sequence at 109 is equalized by the maximum likelihood sequence estimation (MLSE) block 106 and transformed to a bit sequence at 110. The equalized bit sequence 110 is then de-interleaved by $\pi^{-1}$ which involves permutation of the bit positions. The permuted bit sequence at 111 is now suitable for decoding.

Soft decision decoding may bring approximately 1-2dB extra net coding gain (NCG) over hard decision decoding. A soft decision decoder requires soft bit information instead of a hard decisioned bit sequence.

In order to exploit the benefit from soft decision decoding, the soft output Viterbi algorithm (SOVA) and the Bahl-Cocke-Jelinek-Raviv (BCJR) algorithm were proposed. The Soft output Viterbi algorithm (SOVA), as described at https://en.wikipedia.org/wiki/Soft_output_Viterbi_algorithm, and the Bahl-Cocke-Jelinek-Raviv (BCJR) algorithm are two widely used equalization methods to compensate for ISI and generate soft information.

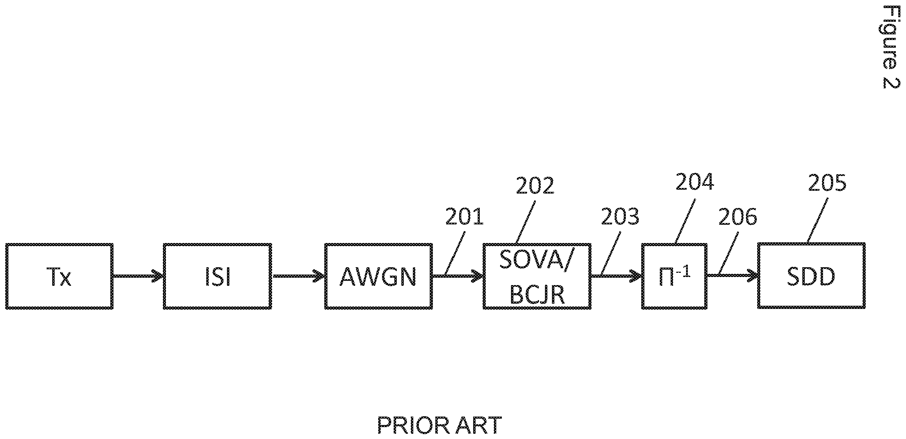

The use of these algorithms by a signal receiver is shown in Figure 2. The majority of Figure 2 is identical to Figure 1, except that the MLSE block 106 is replaced by a soft output block 202. Block 202 receives a noisy ISI signal 201. Block 202 usually employs the SOVA or the BCJR algorithm to generate soft information, such as Log-Likelihood Ratio (LLR) 203. The subsequent $\pi^{-1}$204 and soft decision decoder (SDD) 205 work on the LLR 203 and its permutated version 206 accordingly.

However, the computational complexities of SOVA and BCJR are much higher than that of MLSE, which prohibits their application in systems that are sensitive to power consumption.

BCJR is an algorithm for maximum a posterior (MAP) detection and is commonly thought of as the optimum algorithm. It involves the calculation of forward probabilities and backward probabilities based on the trellis and therefore may be highly complex.

SOVA differs from the classical Viterbi algorithm in that it uses a modified path metric which takes into account the a priori probabilities of the input symbols and produces a soft output indicating the reliability of the decision. Just like the hard output Viterbi algorithm used by MLSE, SOVA contains only the forward path metric calculation based on the trellis instead of bidirectional calculation, as in BCJR. However, SOVA needs to store soft information for each bit and update it at each step moving forward along the trellis. The complexity of SOVA is therefore considerably higher than that of MLSE and prohibits the application of SOVA in systems where low power consumption is required.

It is desirable to develop a low-complexity alternative to the signal receiver solutions described abovethat overcomes these problems.

**SUMMARY OF THE INVENTION**

According to a first aspect there is provided a signal receiver comprising:an input for receiving an input signal comprising multiple symbols;a sequence estimator configured to receive the input signal and form an estimate of a most likely content of the input signal;a first feed-forward equaliser for receiving the estimate or a signal derived therefrom and filtering it to form a first equaliser output, the first feed-forward equaliser being configured so that its central tap is effectively zero;a second feed-forward equaliser for receiving the input signal and filtering it to form a second equaliser output;a summation unit configured to sum the first and second equaliser outputs to form a sum signal, the receiver being configured so that the summation unit sums the first and second equaliser outputs in synchronisation with respect to their dependence on the input signal; anda symbol estimator configured to estimate a symbol stream in dependence on the sum signal.

The signal receiver described herein may, in some implementations, perform close to leading systems whilst having a lower complexity, which may allow for its application in systems that are sensitive to power consumption.

The signal receiver may comprise a delay unit configured to delay the input signal between the input and the second feed-forward equaliser such that the first and second equaliser outputs are provided to the summation unit in synchronisation with respect to their dependence on the input signal. The delay unit may therefore align the symbol sequences in the outputs from the first and second feed-forward equalisers.

The sequence estimator may be a maximum likelihood sequence estimator.This may be a convenient implementation.

The sequence estimator may be a feed-forward equaliser, an infinite impulse response filter or a decision feedback equaliser.This may further reduce the complexity of the proposed equalization scheme.

The sequence estimator may generate a hard output.The sequence estimator may output hard decided symbols instead of bits.

The second feed-forward equaliser may be configured to act on m symbols prior to a reference symbol and n symbols after a reference symbol and the first feed-forward equaliser may be configured to act on m+n symbols prior to a reference symbol and m+n symbols after a reference symbol. This may result in improved performance, as the dispersed energy of the symbol of interest (SOI) may be obtained from the neighboring symbols.

The signal receiver may be configured to adapt tap coefficients of the first and/or second equalisers in dependence on the output of the summation unit.The number of taps of the first and second FFEsmay therefore be dependent on the number of taps of the channel response.

The sequence estimator may be configured to form an estimate of the most likely symbol content of the input signal and the first equaliser may be configured to receive that estimate as input. The sequence estimator and the first equaliser may therefore be comprised in a lower branch of the signal receiver.

The sequence estimator may be configured to form an estimate of the most likely bit content of the input signal, the receiver may comprise a bit to symbol converter for forming a symbol stream in dependence on the estimate and the first equaliser may be configured to receive that symbol stream as input. The sequence estimator may therefore estimate the bit content or the symbol content of the input signal.

The signal receiver may comprise a hard decision decoder configured to implement a hard decision decoding operation on the estimate to form a hard decision stream and the bit to symbol converter may be configured to form the symbol stream in dependence on the hard decision stream.The inclusion of aHDDunit may allow the ISI to be reconstructed more accurately.

The signal receiver may comprise: a de-interleaver for de-interleaving the estimate output from the sequence estimator to form an input to the hard decision decoder; and an interleaver for interleaving the output of the hard decision decoder to form an input to the bit to symbol converter. This may result in a sequence that is suitable for decoding.

The symbol estimator may be configured to estimate the symbol stream by means of a log likelihood ratio (LLR) or hard decision. This may be a convenient implementation.

According to a second aspect there is provided a communication terminal comprising: a signal receiver as described above; and an optical signal detector for detecting an externally generated optical signal and forming the input signal in dependence thereon. The signal receiver may therefore be utilised in optical telecommunications applications.

According to a third aspect there is provided a communication terminal comprising a plurality of signal receivers, each as described above, arranged in series.The performance may be further improved if further iterations are used.

According to a fourth aspect there is provided a method for decoding a signal, comprising: receiving an input signal comprising multiple symbols; forming an estimate of a most likely content of the input signal; filtering the estimate or a signal derived therefrom by means of a first feed-forward equaliser to form a first equaliser output, the first feed-forward equaliser being configured so that its central tap is effectively zero; filtering the input signal by means of a second feed-forward equaliser to form a second equaliser output; summing the first and second equaliser outputs to form a sum signal, the first and second equaliser outputs being summed in synchronisation with respect to their dependence on the input signal; and estimating a symbol stream in dependence on the sum signal.

The method described herein may, in some implementations, perform close to leading methods whilst having a lower complexity, which may allow for its application in systems that are sensitive to power consumption.

## BRIEF DESCRIPTION OF THE FIGURES

The present invention will now be described by way of example with reference to the accompanying drawings.
In the drawings:

Figure 1 schematically illustrates a signal receiver having a MLSE anda hard decision FEC.

Figure 2 schematically illustrates a signal receiver having a SOVA/BCJR and a soft decision FEC.

Figure 3schematically illustrates a first example of a signal receiver embodying a soft output equalizer.

Figure 4 schematically illustrates a second example of a signal receiver embodying a soft output equalizer.

Figure 5 illustrates a low complexity variant of the signal receiver illustrated in Figure 3, where the MLSE 305 is replaced by a simpler equalizer 305a, such as FFE, IIR or DFE, and a slicer 305b.

Figure 6 illustrates a low complexity variant of the signal receiver illustrated in Figure 4 where the MLSE 404 is replaced by a simpler equalizer 404a such as FFE, IIR or DFE, and a symbol to bit block 404b.

Figure 7 illustrates a concatenated scheme.

Figure 8 illustrates the building block used in Figure 7.

Figure 9 illustrates a reference system.

Figure 10 illustrates the results of simulationsusing a PAM4 signal over 1+0.5D channel.

Figure 11 illustrates a flowchart for an example of a method for decoding a signal.

## DETAILED DESCRIPTION

In the examples given below, the present system is used to implement a soft output equaliser. The number of output bits of the equaliser at each quantisation could be reduced to the number of available quanta (e.g. symbols/bits), so that the equaliser performs as a hard output equaliser or hard decision decoder (HDD).

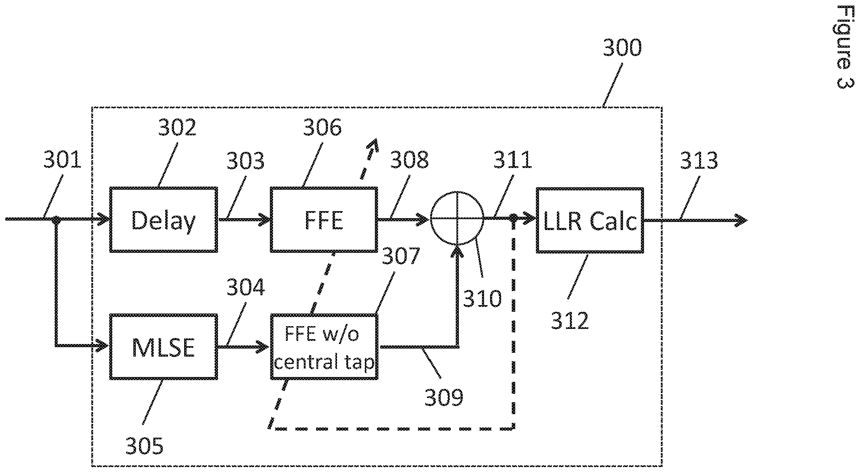

Figure 3 shows an example of a signal receiver 300. A noisy ISI signal 301 is received at an input of the receiver and fed to two branches. The delay module 302 in the upper branch aligns the symbol sequence 303 with the output symbol sequence 304 from the MLSE block 305 in the lower branch. Unlike the MLSE 106 in Figure 1, the MLSE 305 outputs hard decided symbols instead of bits. Then signals 303 and 304 are each filtered by an FFE: FFE 306 in the upper branch and FFE 307 in the lower branch.The FFE 307 at the lower branch is without a central tap, or the central tap coefficient may be forced to be approximately, or exactly, zero. The tap coefficients of the two FFEs 306, 307 can be derived if the channel impulse response is known (an example is given in the embodiments described below), or they can be adaptively updated using algorithms such as constant modulus algorithm (CMA), data aided least mean squares (LMS), decision directed lease mean squares (DD-LMS) or recursive least squares (RLS) etc.

The two filtered signals 308 and 309 are then combined at the adder 310. The adder output 311 is fed to the LLR calculator 312 to produce soft information 313 for processing by a subsequent de-interleaver and SDD.

The MLSE output may be more reliable than the symbol-wise hard decision of the channel output and thus can be used to reconstruct the ISI, which can be deduced from the channel output. Preferably,the signal at 311 may be close to ISI-free symbols with only additive noise, based on which high quality soft information used by the FEC decoder can be easily calculated.

Even though, traditionally, the ISI falling in the SOI is likely cancelled out with the help of MLSE in known embodiments, the performance may still suffer from power penalty because the energy of SOI disperses over the neighboring time slots due to ISI channel.

In the receiver described herein, the FFE 306 in the upper branch of Figure3is configured to collect the dispersed energy of the SOI. In order to obtain the energy of the SOI from the neighboring symbols, help from the lower branch is used to cancel the neighboring symbols themselves, as well as the ISI from other symbols (except the SOI).

The number of taps of the upper FFE and the lower FFE may be dependent on the number of taps of the channel response. It is assumed that the response of the ISI channel has Npre taps before the SOI and Npost taps after the SOI which means the SOI will impose ISI on the Npre preceding symbols and the Npost subsequent symbols. Then, the upper FFE has Npre+1 +Npost taps and the low FFE has Npre+Npost+0+Npre+Npost taps where the central 0 means the tap of the lower FFE corresponding to the SOI is forced to zero.

Herein, the central tap is therefore the one of the taps that is aligned with the SOI (for example, where the number of taps is an even number).

Therefore, in general terms, the signal receiver300 comprisesan input for receiving an input signal 301 comprising multiple symbols. Sequence estimator 300 is configured to receive the input signal 301 and form an estimate of a most likely content of the input signal 301 (in MLSE 305). A first feed-forward equalizer 307is configured to receive the estimate or a signal derived therefrom and filter it to form a first equaliser output 309. The first feed-forward equalizer 307 is configured so that its central tap is effectively zero. The receiver also comprises a second feed-forward equaliser 306 for receiving the input signal and filtering it to form a second equaliser output 308. The receiver also comprises a summation unit 310 configured to sum the first and second equaliser outputs 309, 308 to form a sum signal 311. The signal receiver is configured so that the summation unit 310 sums the first and second equaliser outputs 309, 308 in synchronisation with respect to their dependence on the input signal. The signal receiver also comprisesa symbol estimator 312 configured to estimate a symbol stream in dependence on the sum signal.

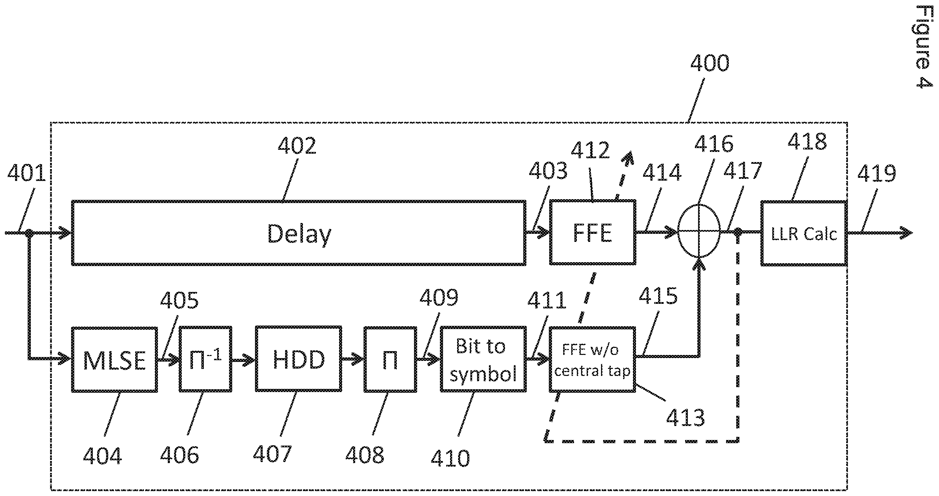

Figure 4 shows a second example of a soft output equalizer which may improve the performance of a signal receiverdue to a HDD included in the lower branch. With the help of the HDD, the ISI can be reconstructed more accurately and the performance of the equivalent channel may be closer to a pure AWGN channel.

Similarly to Figure 3, in Figure 4, the signal receiver 400 receives a noisy ISI signal 401 at an input of the receiverwhich is fed to two branches. The delay module 402 in the upper branch aligns the symbol sequence 403 with the output symbol sequence 411 from the blocks in the lower branch.

To facilitate the HDD, the MLSE 404 at lower branch generates hard decided bits 405 instead of symbols as in the MLSE 305. The bit sequence 405 is then processed by the de-interleaver 406, HDD 407 and interleaver 408. With the help of HDD 407, the bit sequence 409may be much more reliable than 405. After bit to symbol block 410, signal 409 is converted to symbol sequence 411 which may be much more reliable than signal 304 in Figure 3. Since there are more processing blocks at the lower branch in Figure 4, a larger delay module 402 is needed at the upper branch in order to align the symbol sequence 403 with 411. The following manipulation of 403 and 411 is the same as that described with reference to Figure 3.

The signals 403 and 411 are each filtered by an FFE: FFE 412 in the upper branch and FFE 413 in the lower branch.The FFE 413 at the lower branch is without a central tap, or the central tap coefficient may be forced to be approximately, or exactly, zero. The tap coefficients of the two FFEs 412, 413 can be derived if the channel impulse response is known (an example is given in the embodiments described below), or they can be adaptively updated using algorithms such as CMA, LMS, DD-LMS or RLS, as described previously.

The two filtered signals 414 and 415 are then combined at the adder416. The adder output 417 is fed to the LLR calculator 418to produce soft information 419 for processing by a subsequent de-interleaver and SDD.

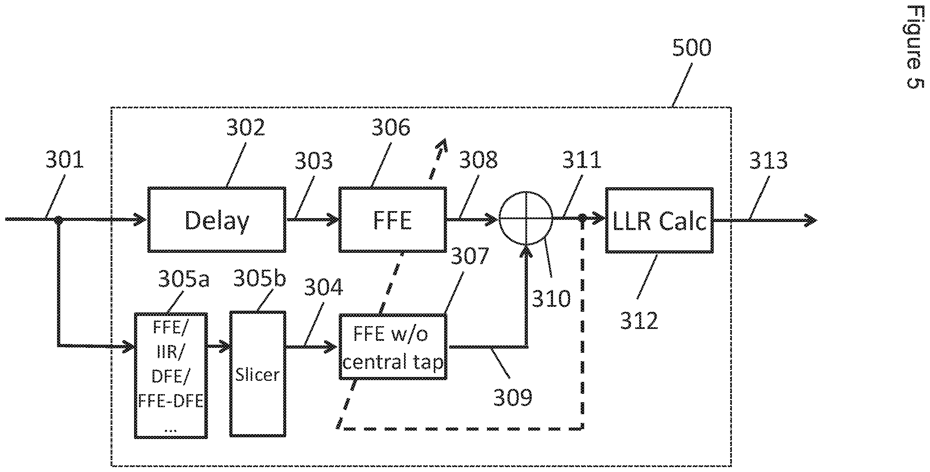

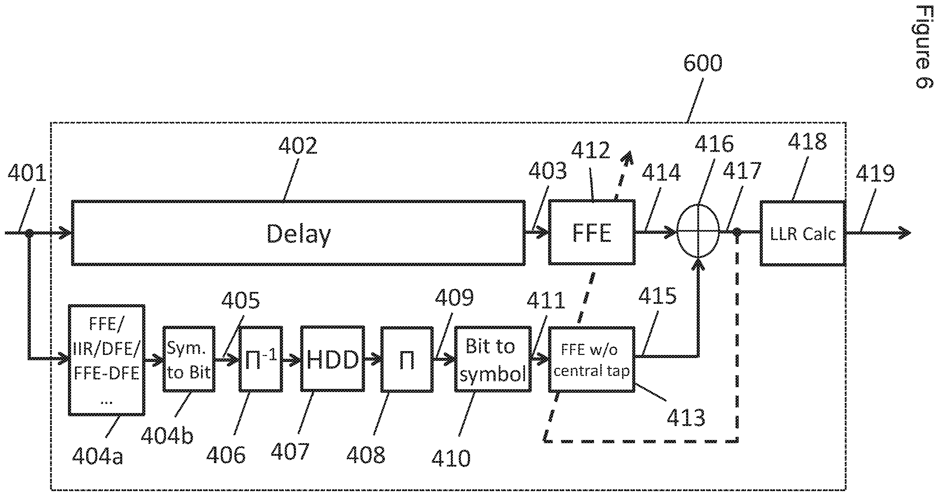

In order to further reduce the complexity of the proposed equalization schemes, the MLSE modules in Figures 3 and 4 may be replaced by other simpler equalizers such as a FFE filter, infinite impulse response (IIR) filter or a decision feedback equalizer (DFE), or other suitable equalizers. Such schemes are shown in Figure 5 and Figure 6.

Figure 5 illustrates a low complexity variant of the signal receiver illustrated in Figure 3, where the MLSE 305 is replaced by a simpler equalizer 305a, such as FFE, IIR or DFE, and a slicer 305b.

Figure 6 illustrates a low complexity variant of the signal receiver illustrated in Figure 4 where the MLSE 404 is replaced by a simpler equalizer 404a such as FFE, IIR or DFE, and a symbol to bit block 404b.

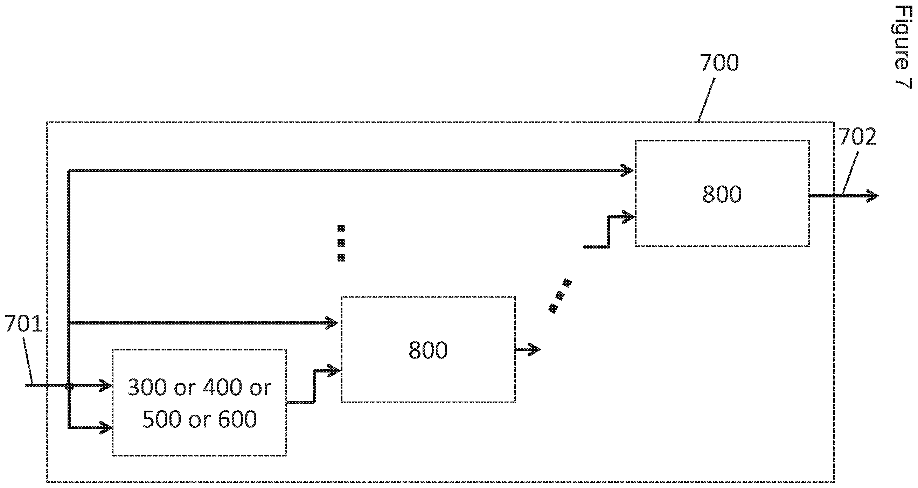

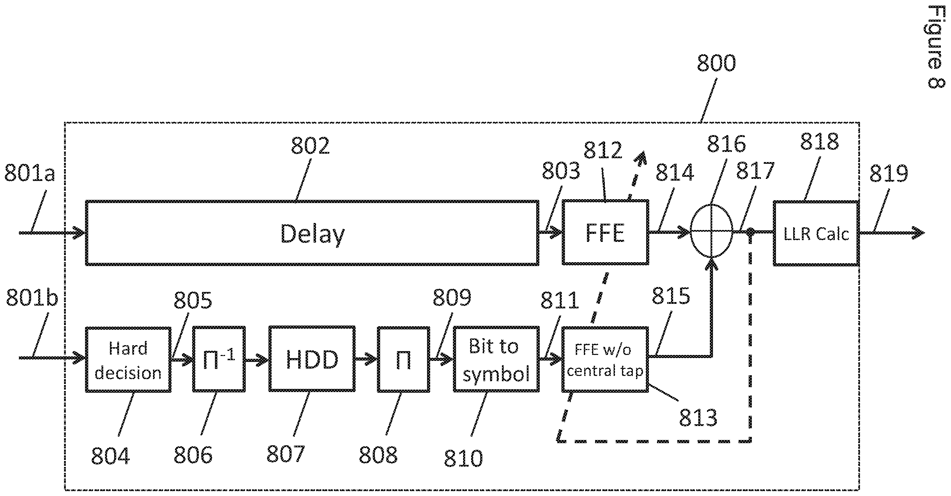

The performance may be further improved by introducing further iterations or by concatenating multiple equalizers in a signal receiver 700, as shown in Figure 7. The first stage employs one of the previously described soft output equalizers such as 300, 400, 500 or 600. The detail of 800 is shown in Figure 8. Stage 800 takes two input signals: one is a copy of noisy input signal 701 (shown as 801a in Figure 8) and another is from a previous stage (shown as 801b in Figure 8).

In Figure 8, thestage800 receives input signals 801a and 801b at the two branches. The delay module 802 in the upper branch aligns the symbol sequence 803 with the output symbol sequence 811 from the blocks in the lower branch.

To facilitate the HDD, the hard decision 804at lower branch generates hard decided bits 805. The bit sequence 805 is then processed by the de-interleaver806, HDD 807 and interleaver808 to give bit sequence 809. After bit to symbol block810, signal 809 is converted to symbol sequence 811. The delay module 802 aligns the signal803 with 811.

The signals 803 and 811 are each filtered by an FFE: FFE 812 in the upper branch and FFE 813 in the lower branch.The FFE 813 at the lower branch is without a central tap, or the central tap coefficient may be forced to be approximately, or exactly, zero. The tap coefficients of the two FFEs 812, 813 can be derived if the channel impulse response is known, or they can be adaptively updated using algorithms such as CMA, LMS, DD-LMS or RLS, as described previously.

The two filtered signals 814 and 815 are then combined at the adder816. The adder output 817 is fed to the LLR calculator 818 to produce soft information 819.

The final output 702in Figure 7 is fed to a de-interleaver and SDD.

In an alternative configuration, where thesignal receiver embodies a hard output equalizer, the output may comprise hard information and may be fed to a HDD instead of a SDD.

In summary, the equalizer described herein comprises two branches. The first branch contains a delay module and an FFE. The delay module aligns the first branch with the second branch. The FFE collects the energy of the desired symbol in relevant time slots.

The second branch contains a MLSE and an FFE without a central tap (the current symbol) which reconstructs the interference to the desired symbol in relevant time slots. The tap coefficients of the FFE can be trained by various control algorithms such as LMS or RLS, with or without training sequence.

A hard decision decoder can be optionally included in the lower branch in order to reconstruct the ISI more accurately.

The performance may be further improved if further iterations are used.

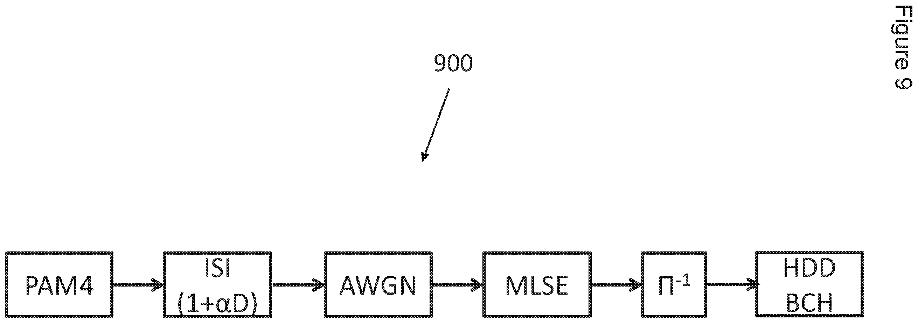

In the following simulations, the system 900 shown in Figure 9 is taken as the reference (MLSE+HDD). Here, PAM4 is used as the modulation format. The ISI channel has two taps 1 and $\alpha$ where $\alpha \leq 1$, or equivalently the impulse response of the channel is [1, $\alpha$], which means the SOI has amplitude 1 and imposes ISI with amplitude $\alpha$ to the next symbol. To illustrate the performance with FEC, a BCH code with t=2 was used in the simulation.

Since the channel tap coefficients are known, the tap coefficients of the FFEs in the upper and lower branches in the systems previously described may be calculated.

Let $r_{-1}$, $r_0$, $r_1$ be three consecutive symbols from the channel and $\hat{s}_{-1}$, $\hat{s}_0$, $\hat{s}_1$ be the corresponding sysmbols output by MLSE or the bit to symbol module after the hard decision decoder in the lower branch. The output symbol at the adder after the two FFEs can be expressed as:

$$z_0 = [(r_0 - \alpha\hat{s}_{-1}) + \alpha(r_1 - \hat{s}_1)]/(1 + \alpha^2)$$

$$= \frac{\alpha}{1 + \alpha^2} r_1 + \frac{1}{1 + \alpha^2} r_0 - \frac{\alpha}{1 + \alpha^2} \hat{s}_1 - \frac{\alpha}{1 + \alpha^2} \hat{s}_{-1}$$

From this formula, the impulse responses of the two FFEs may be derived.

The upper FFE has impulse response:

$$[\frac{\alpha}{1 + \alpha^2}, \frac{1}{1 + \alpha^2}]$$

And the lower FFE has impulse response:

$$[-\frac{\alpha}{1 + \alpha^2}, -\frac{\alpha}{1 + \alpha^2}]$$

Substituting $r_0 = s_0 + \alpha s_{-1} + n_0$ and $r_1 = s_1 + \alpha s_0 + n_1$ to $z_0$ and assuming $\hat{s}_{-1} = s_{-1}, \hat{s}_1 = s_1$, gives:

$$z_0 = [(s_0 + n_0) + \alpha(\alpha s_0 + n_1)]/(1 + \alpha^2)$$

$$= s_0 + (n_0 + \alpha n_1)/(1 + \alpha^2)$$

Therefore, the same AWGN performance may be obtained without ISI.

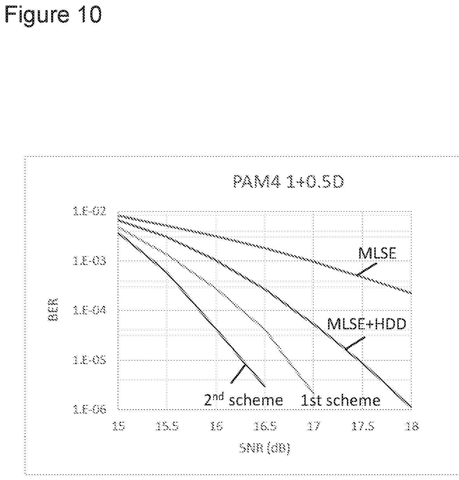

Figure 10 shows simulation results obtainedusing a PAM4 signal over 1+0.5D channel. If the signal-to-noise ratio (SNR) at BER = 1e$^{-5}$ is compared, the proposed exemplary scheme 1 (i.e. using the apparatus shown in Figure 3) outperforms the reference (MLSE+HDD) by 0.75dB and the proposed exemplary scheme 2 (i.e. using the apparatus shown in Figure 4) offers another 0.5 dB SNR gain.

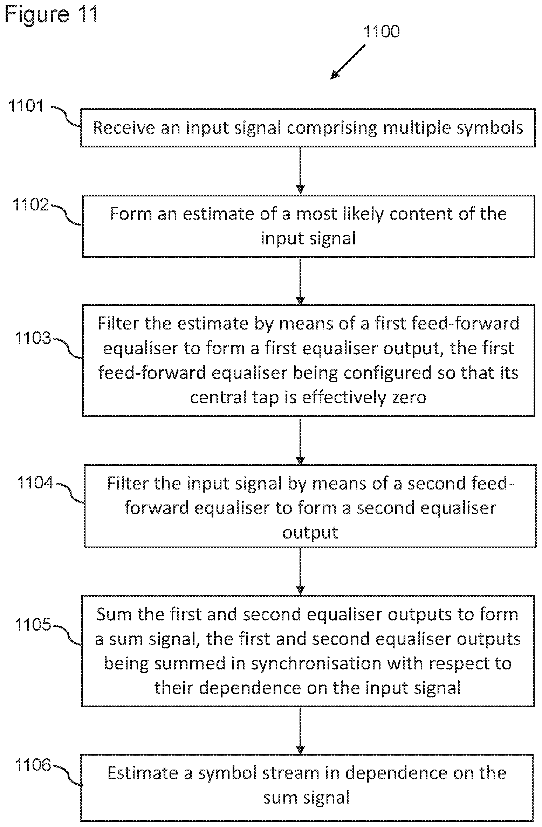

Figure 11 shows a flowchart for an example of a method 1100 for decoding a signal as described herein. At step 1101, the method comprises receiving an input signal comprising multiple symbols. At step 1102, the method comprises forming an estimate of a most likely content of the input signal. At step 1103, the method comprises filtering the estimate by means of a first feed-forward equaliser to form a first equaliser output, the first feed-forward equaliser being configured so that its central tap is effectively zero. At step 1104, the method comprises filtering the input signal by means of a second feed-forward equaliser to form a second equaliser output. At step 1105, the method comprises summing the first and second equaliser outputs to form a sum signal, the first and second equaliser outputs being summed in synchronisation with respect to their dependence on the input signal. At step 1106, the method comprises estimating a symbol stream in dependence on the sum signal.

In order to obtain the coding gain from soft decision FEC decoder, a low complexity soft output equalizer and its high-performance variant are described herein. As mentioned earlier, according an alternative configuration, the equalizer and its high-performance variant could provide a hard output in order to accommodate a subsequent HDD.

The performance of the equalizer has, in some implementations, been shown to be better than previously proposed solutions and the high-performance variant has, in some implementations, been shown to perform close to SOVA, while the complexity is much lower.

Low-cost short reach optical transmission system can only accommodate DSPs having a low power consumption. Traditionally, only hard output equalizers such as MLSE and hard decision FEC have beencommonly considered, because the conventional soft output equalizers such as SOVA, BCJR consume too much power. The apparatus and method described herein may be used in systems where low power consumption is required and may therefore be effectively used in next generation short-reach systems.

In view of the foregoing description it will be evident to a person skilled in the art that various modifications may be made within the scope of the invention.

**Claims**

1. A signal receiver comprising:

   an input for receiving an input signal comprising multiple symbols;
   a sequence estimator configured to receive the input signal and form an estimate of a most likely content of the input signal;
   a first feed-forward equaliser for receiving the estimate or a signal derived therefrom and filtering it to form a first equaliser output, the first feed-forward equaliser being configured so that its central tap is effectively zero;
   a second feed-forward equaliser for receiving the input signal and filtering it to form a second equaliser output;
   a summation unit configured to sum the first and second equaliser outputs to form a sum signal, the receiver being configured so that the summation unit sums the first and second equaliser outputs in synchronisation with respect to their dependence on the input signal; and
   a symbol estimator configured to estimate a symbol stream in dependence on the sum signal.

2. A signal receiver as claimed in claim 1, comprising a delay unit configured to delay the input signal between the input and the second feed-forward equaliser such that the first and second equaliser outputs are provided to the summation unit in synchronisation with respect to their dependence on the input signal

3. A signal receiver as claimed in claim 1 or 2, wherein the sequence estimator is a maximum likelihood sequence estimator.

4. A signal receiver as claimed in claim 1 or 2, wherein the sequence estimator is a feed-forward equaliser, an infinite impulse response filter or a decision feedback equaliser.

5. A signal receiver as claimed in any preceding claim, wherein the sequence estimator generates a hard output.

6. A signal receiver as claimed in any preceding claim, wherein the second feed-forward equaliser is configured to act on m symbols prior to a reference symbol and n symbols after a reference symbol and the first feed-forward equaliser is configured to act on m+n symbols prior to a reference symbol and m+n symbols after a reference symbol.

7. A signal receiver as claimed in any preceding claim, the receiver being configured to adapt tap coefficients of the first and/or second equalisers in dependence on the output of the summation unit.

8. A signal receiver as claimed in any preceding claim, wherein the sequence estimator is configured to form an estimate of the most likely symbol content of the input signal and the first equaliser is configured to receive that estimate as input.

9. A signal receiver as claimed in any of claims 1 to 7, wherein the sequence estimator is configured to form an estimate of the most likely bit content of the input signal, the receiver comprises a bit to symbol converter for forming a symbol stream in dependence on the estimate and the first equaliser is configured to receive that symbol stream as input.

10. A signal receiver as claimed in claim 9, comprising a hard decision decoder configured to implement a hard decision decoding operation on the estimate to form a hard decision stream and the bit to symbol converter is configured to form the symbol stream in dependence on the hard decision stream.

11. A signal receiver as claimed in claim 10, comprising:

a de-interleaver for de-interleaving the estimate output from the sequence estimator to form an input to the hard decision decoder; and
an interleaver for interleaving the output of the hard decision decoder to form an input to the bit to symbol converter.

12. A signal receiver as claimed in any preceding claim, wherein the symbol estimator is configured to estimate the symbol stream by means of a log likelihood ratio.

13. A communication terminal comprising:

a signal receiver as claimed in any preceding claim; and
an optical signal detector for detecting an externally generated optical signal and forming the input signal in dependence thereon.

14. A communication terminal comprising a plurality of signal receivers, each as claimed in any of claims 1 to 12, arranged in series.

15. A method for decoding a signal, comprising:

receiving an input signal comprising multiple symbols;
forming an estimate of a most likely content of the input signal;
filtering the estimate or a signal derived therefrom by means of a first feed-forward equaliser to form a first equaliser output, the first feed-forward equaliser being configured so that its central tap is effectively zero;
filtering the input signal by means of a second feed-forward equaliser to form a second equaliser output;
summing the first and second equaliser outputs to form a sum signal, the first and second equaliser outputs being summed in synchronisation with respect to their dependence on the input signal; and
estimating a symbol stream in dependence on the sum signal.

**Patentansprüche**

1. Signalempfänger, umfassend:

einen Eingang zum Empfangen eines Eingangssignals, das mehrere Symbole umfasst;
einen Sequenzschätzer, der dazu konfiguriert ist, das Eingangssignal zu empfangen und eine Schätzung des wahrscheinlichsten Inhalts des Eingangssignals zu bilden;
einen ersten Vorwärtsentzerrer zum Empfangen der Schätzung oder eines davon abgeleiteten Signals und zum Filtern derselben, um eine erste Entzerrerausgabe zu bilden, wobei der erste Vorwärtsentzerrer so konfiguriert ist, dass sein zentraler Abgriff effektiv Null ist;
einen zweiten Vorwärtsentzerrer zum Empfangen des Eingangssignals und zum Filtern desselben, um eine zweite Entzerrerausgabe zu bilden;
eine Summiereinheit, die dazu konfiguriert ist, die ersten und zweiten Entzerrerausgaben zu summieren, um ein Summensignal zu bilden, wobei der Empfänger so konfiguriert ist, dass die Summiereinheit die ersten und zweiten Entzerrerausgaben synchron in Bezug auf ihre Abhängigkeit von dem Eingangssignal summiert; und
einen Symbolschätzer, der dazu konfiguriert ist, einen Symbolstrom in Abhängigkeit von dem Summensignal zu schätzen.

2. Signalempfänger nach Anspruch 1, umfassend eine Verzögerungseinheit, die so konfiguriert ist, dass sie das Eingangssignal zwischen dem Eingang und dem zweiten Vorwärtsentzerrer verzögert, so dass die ersten und zweiten Entzerrerausgaben der Summiereinheit synchron in Bezug auf ihre Abhängigkeit vom Eingangssignal bereitgestellt werden.

3. Signalempfänger nach Anspruch 1 oder 2, wobei der Sequenzschätzer ein Sequenzschätzer mit maximaler Wahrscheinlichkeit ist.

4. Signalempfänger nach Anspruch 1 oder 2, wobei der Sequenzschätzer ein Vorwärtsentzerrer, ein Filter mit unendlicher Impulsantwort oder ein entscheidungsrückgekoppelter Entzerrer ist.

5. Signalempfänger nach einem der vorhergehenden Ansprüche, wobei der Sequenzschätzer eine Hartausgabe erzeugt.

6. Signalempfänger nach einem der vorhergehenden Ansprüche, wobei der zweite Vorwärtsentzerrer so konfiguriert ist, dass er auf m Symbole vor einem Referenzsymbol und n Symbole nach einem Referenzsymbol einwirkt, und der erste Vorwärtsentzerrer so konfiguriert ist, dass er auf m+n Symbole vor einem Referenzsymbol und m+n Symbole nach einem Referenzsymbol wirkt.

7. Signalempfänger nach einem der vorhergehenden Ansprüche, wobei der Empfänger dazu konfiguriert ist, die Abgriffskoeffizienten des ersten und/oder zweiten Entzerrers in Abhängigkeit von der Ausgabe der Summiereinheit anzupassen.

8. Signalempfänger nach einem der vorhergehenden Ansprüche, wobei der Sequenzschätzer so konfiguriert ist, dass er eine Schätzung des wahrscheinlichsten Symbolinhalts des Eingangssignals bildet, und der erste Entzerrer so konfiguriert ist, dass er diese Schätzung als Eingang empfängt.

9. Signalempfänger nach einem der Ansprüche 1 bis 7, wobei der Sequenzschätzer so konfiguriert ist, dass er eine Schätzung des wahrscheinlichsten Bitinhalts des Eingangssignals bildet, der Empfänger einen Bit-Symbol-Konverter zum Bilden eines Symbolstroms in Abhängigkeit von der Schätzung umfasst und der erste Entzerrer so konfiguriert ist, dass er diesen Symbolstrom als Eingang empfängt.

10. Signalempfänger nach Anspruch 9, der einen Hard-Decision-Decoder umfasst, der so konfiguriert ist, dass er einen Hard-Decision-Decodierungsvorgang an der Schätzung durchführt, um einen Hard-Decision-Strom zu bilden, und der Bit-zu-Symbol-Wandler ist so konfiguriert, dass er den Symbolstrom in Abhängigkeit von dem Hard-Decision-Strom bildet.

11. Signalempfänger nach Anspruch 10, umfassend:

   einen Entschachtler zum Entschachteln der Schätzausgabe von dem Sequenzschätzer, um eine Eingabe für den Hard-Decision-Decoder zu bilden; und
   einen Verschachtler zum Verschachteln der Ausgabe des Hard-Decision-Decoders, um eine Eingabe für den Bit-zu-Symbol-Wandler zu bilden.

12. Signalempfänger nach einem der vorhergehenden Ansprüche, wobei der Symbolschätzer so konfiguriert ist, dass er den Symbolstrom mittels eines Log-Wahrscheinlichkeitsverhältnisses schätzt.

13. Kommunikationsendgerät, umfassend:

   einen Signalempfänger nach einem der vorhergehenden Ansprüche; und
   einen optischen Signaldetektor zum Erfassen eines extern erzeugten optischen Signals und zum Bilden des Eingangssignals in Abhängigkeit davon.

14. Kommunikationsendgerät, das eine Vielzahl von in Reihe angeordneten Signalempfängern umfasst, jeweils gemäß einem der Ansprüche 1 bis 12.

15. Verfahren zum Dekodieren eines Signals, umfassend:

   einen Eingang zum Empfangen eines Eingangssignals, das mehrere Symbole umfasst;
   Bilden einer Schätzung eines wahrscheinlichsten Inhalts des Eingangssignals;
   Filtern der Schätzung oder eines daraus abgeleiteten Signals mittels eines ersten Vorwärtsentzerrers, um eine erste Entzerrerausgabe zu bilden, wobei der erste Vorwärtsentzerrer so konfiguriert ist, dass sein zentraler Abgriff effektiv Null ist;
   Filtern des Eingangssignals mittels eines zweiten Vorwärtsentzerrers, um eine zweite Entrererausgabe zu

bilden;
Summieren der ersten und zweiten Entzerrerausgaben, um ein Summensignal zu bilden, wobei die ersten und zweiten Entzerrerausgaben synchron hinsichtlich ihrer Abhängigkeit vom Eingangssignal summiert werden; und
Schätzen eines Symbolstroms in Abhängigkeit vom Summensignal.

## Revendications

1. Récepteur de signal comprenant :

   une entrée destinée à recevoir un signal d'entrée comprenant de multiples symboles ;
   un estimateur de séquence configuré pour recevoir le signal d'entrée et former une estimation d'un contenu le plus probable du signal d'entrée ;
   un premier égaliseur à anticipation destiné à recevoir l'estimation ou un signal dérivé de celle-ci et à la filtrer pour former une première sortie d'égaliseur, le premier égaliseur à anticipation étant configuré de manière à ce que sa prise centrale soit effectivement nulle ;
   un second égaliseur à anticipation destiné à recevoir le signal d'entrée et à le filtrer pour former une seconde sortie d'égaliseur ;
   une unité d'addition configurée pour additionner les première et seconde sorties d'égaliseur pour former un signal d'addition, le récepteur étant configuré de manière à ce que l'unité d'addition additionne les première et seconde sorties d'égaliseur en synchronisation par rapport à leur dépendance au signal d'entrée ; et
   un estimateur de symbole configuré pour estimer un flux de symbole en fonction du signal d'addition.

2. Récepteur de signal selon la revendication 1, comprenant une unité de retard configurée pour retarder le signal d'entrée entre l'entrée et le second égaliseur à anticipation de sorte que les première et seconde sorties d'égaliseur sont fournies à l'unité d'addition en synchronisation par rapport à leur dépendance au signal d'entrée.

3. Récepteur de signal selon la revendication 1 ou 2, dans lequel l'estimateur de séquence est un estimateur de séquence à probabilité maximale.

4. Récepteur de signal selon la revendication 1 ou 2, dans lequel l'estimateur de séquence est un égaliseur à anticipation, un filtre à réponse impulsionnelle infinie ou un égaliseur à décision rétroactive.

5. Récepteur de signal selon une quelconque revendication précédente, dans lequel l'estimateur de séquence génère une sortie ferme.

6. Récepteur de signal selon une quelconque revendication précédente, dans lequel le second égaliseur à anticipation est configuré pour agir sur des symboles m avant un symbole de référence et sur des symboles n après un symbole de référence et le premier égaliseur à anticipation est configuré pour agir sur des symboles m+n avant un symbole de référence et sur des symboles m+n après un symbole de référence.

7. Récepteur de signal selon une quelconque revendication précédente, le récepteur étant configuré pour adapter les coefficients de prise du premier et/ou du second égaliseur en fonction de la sortie de l'unité d'addition.

8. Récepteur de signal selon une quelconque revendication précédente, dans lequel l'estimateur de séquence est configuré pour former une estimation du contenu de symbole le plus probable du signal d'entrée et le premier égaliseur est configuré pour recevoir cette estimation en tant qu'entrée.

9. Récepteur de signal selon l'une quelconque des revendications 1 à 7, dans lequel l'estimateur de séquence est configuré pour former une estimation du contenu binaire le plus probable du signal d'entrée, le récepteur comprend un convertisseur de bit en symbole destiné à former un flux de symbole en fonction de l'estimation et le premier égaliseur est configuré pour recevoir ce flux de symbole en tant qu'entrée.

10. Récepteur de signal selon la revendication 9, comprenant un décodeur de décision ferme configuré pour mettre en œuvre une opération de décodage de décision ferme sur l'estimation pour former un flux de décision ferme et le convertisseur de bit en symbole est configuré pour former le flux de symbole en fonction du flux de décision ferme.

11. Récepteur de signal selon la revendication 10, comprenant :

un désentrelaceur destiné à désentrelacer la sortie estimée provenant de l'estimateur de séquence pour former une entrée pour le décodeur de décision ferme ; et

un entrelaceur destiné à entrelacer la sortie du décodeur de décision ferme pour former une entrée pour le convertisseur de bit en symbole.

12. Récepteur de signal selon une quelconque revendication précédente, dans lequel l'estimateur de symbole est configuré pour estimer le flux de symbole au moyen d'un rapport de probabilité logarithmique.

13. Terminal de communication comprenant :

un récepteur de signal selon une quelconque revendication précédente ; et
un détecteur de signal optique destiné à détecter un signal optique généré de manière externe et former le signal d'entrée en fonction de celui-ci.

14. Terminal de communication comprenant une pluralité de récepteurs de signal, chacun selon l'une quelconque des revendications 1 à 12, disposés en série.

15. Procédé de décodage d'un signal, comprenant :

la réception d'un signal d'entrée comprenant de multiples symboles ;
la formation d'une estimation d'un contenu le plus probable du signal d'entrée ;
la filtration de l'estimation ou un signal dérivé de celle-ci au moyen d'un premier égaliseur à anticipation pour former une première sortie d'égaliseur, le premier égaliseur à anticipation étant configuré de manière à ce que sa prise centrale soit effectivement nulle ;
la filtration du signal d'entrée au moyen d'un second égaliseur à anticipation pour former une seconde sortie d'égaliseur ;
l'addition des première et seconde sorties d'égaliseur pour former un signal d'addition, les première et seconde sorties d'égaliseur étant additionnées en synchronisation par rapport à leur dépendance au signal d'entrée ; et
l'estimation d'un flux de symbole en fonction du signal d'addition.

Figure 1

```
  102        103          105         106        107       108
    \   101    \    104     \    109     \   110    \  111    \
     \    |     \    |       \    |       \    |     \   |     \
  ┌──────┐   ┌──────┐    ┌──────┐    ┌──────┐   ┌─────┐   ┌──────┐
  │  Tx  │──▶│ ISI  │───▶│ AWGN │───▶│ MLSE │──▶│ Π⁻¹ │──▶│ HDD  │
  └──────┘   └──────┘    └──────┘    └──────┘   └─────┘   └──────┘
```

PRIOR ART

Figure 2

PRIOR ART

Figure 3

Figure 4

Figure 5

Figure 6

EP 4 140 046 B1

Figure 7

Figure 8

Figure 9

900

| PAM4 | → | ISI<br>(1+αD) | → | AWGN | → | MLSE | → | Π⁻¹ | → | HDD<br>BCH |

Figure 10

## Figure 11

1100

1101 — Receive an input signal comprising multiple symbols

1102 — Form an estimate of a most likely content of the input signal

1103 — Filter the estimate by means of a first feed-forward equaliser to form a first equaliser output, the first feed-forward equaliser being configured so that its central tap is effectively zero

1104 — Filter the input signal by means of a second feed-forward equaliser to form a second equaliser output

1105 — Sum the first and second equaliser outputs to form a sum signal, the first and second equaliser outputs being summed in synchronisation with respect to their dependence on the input signal

1106 — Estimate a symbol stream in dependence on the sum signal